## Europäisches Patentamt
## European Patent Office
## Office européen des brevets

(19)

(11) Veröffentlichungsnummer : **0 120 511**
**B1**

(12) **EUROPÄISCHE PATENTSCHRIFT**

(45) Veröffentlichungstag der Patentschrift :
**19.07.89**

(51) Int. Cl.⁴ : **B 29 C 49/00**

(21) Anmeldenummer : **84200211.5**

(22) Anmeldetag : **17.02.84**

(54) Verfahren zum Herstellen eines eine Durchbrechung aufweisenden Blasformkörpers.

(30) Priorität : **24.02.83 DE 3306469**

(43) Veröffentlichungstag der Anmeldung :
**03.10.84 Patentblatt 84/40**

(45) Bekanntmachung des Hinweises auf die Patenterteilung : **19.07.89 Patentblatt 89/29**

(84) Benannte Vertragsstaaten :
**FR GB IT NL SE**

(56) Entgegenhaltungen :
**DE—A— 1 479 494**
**DE—A— 2 133 558**
**DE—A— 2 162 871**
**DE—B— 1 220 588**
**US—A— 3 764 644**
**US—A— 3 821 344**

(73) Patentinhaber : **REHAU AG + Co**
**Rheniumhaus**
**D-8673 Rehau (DE)**

(72) Erfinder : **Burkel, Heinz**
**Wernher-von-Braun-Strasse 24**
**D-8671 Oberkotzau (DE)**

## Beschreibung

Die Erfindung betrifft ein Verfahren zum Herstellen eines eine Durchbrechung aufweisenden Blasformkörpers aus thermoplastischem Kunststoff, bei dem ein schlauchförmiger Rohling nach dem Verschließen seiner beiden Enden mittels Blasdruckes durch Anlegen an die Innenoberfläche einer Blasform zu einem Hohlkörper blasgeformt und durch eine Öffnungsbewegung eines der Durchbrechung zugeordneten Teiles der Blasform der der Durchbrechung entsprechende Wandbereich des Hohlkörpers entlang des Umfangs der Durchbrechung abgerissen wird.

Aus der DE-OS 14 79 494 ist ein derartiges Verfahren zum Erzeugen einer Durchbrechung in blasgeformten Hohlkörpern bekannt. Die Aufgabenstellung dieser Vorveröffentlichung geht davon aus, Blasformkörper mit Öffnungen beliebiger Konfiguration zu versehen, ohne daß hierzu ein besonderer Arbeitsgang erforderlich wäre. Zur Lösung dieser Aufgabe werden beim Aufweiten des Blasformkörpers in der Blasform die Öffnungen begrenzende Sollbruchstellen eingeformt, welche bei der mit der Ausformung des Blasformkörpers einsetzenden Öffnungsbewegung der Werkzeugteile aufgerissen werden, wonach der mit der oder den Öffnungen versehene Blasformkörper dem Werkzeug entnommen werden kann. Dieses bekannte Verfahren ist technisch nur dann durchführbar, wenn das Kunststoffmaterial des Blasformkörpers bereits weitgehend verfestigt ist. Ein vor diesem Materialzustand einsetzendes Öffnen der Blasform würde dazu führen, daß der Blasformkörper in sich zusammenfiele.

Damit hat das bekannte Verfahren den Nachteil, daß es bei der herstellung der Durchbrechung an die Zykluszeiten des ausgeformten und verfestigten Blasformkörpers gebunden ist. Darüber hinaus ist als nachteilig festzustellen, daß durch das Abreißen der der Durchbrechung entsprechenden Wandbereiche eine Verschwächung der Wanddicken am Umfang der Durchbrechung nicht zu vermeiden ist. Dies wirkt sich negativ auf die späteren Verwendungen des hergestellten Blasformkörpers aus.

Aus der DE-PS 25 36 766 ist zudem ein leistenförmiger Blasformkörper bekannt, der als Zier- und Schutzleiste bei verschiedensten Verwendungszwecken dient. Werden solche geschlossenen Blasformkörper als Halbzeuge einer weiteren Verarbeitung zugeführt, hat sich als nachteilig herausgestellt, daß neben dem Herstellungsvorgang des Aufblasens weitere Konfektionierungsgänge erforderlich sind, um beispielsweise Öffnungen für Halterungen in die Wandung des Blasformkörpers einzubringen. Diese zusätzlichen Arbeitsgänge bedeuten eine Verteuerung des Endproduktes. Da diese Öffnungen in die Blasformkörperwand eingeschnitten oder eingestanzt werden müssen, liegt die Blasformkörperwand im Bereich der Durchbrechungen in der Dicke ihres Querschnitts vor.

Der Erfindung liegt die Aufgabe zugrunde, einen hohlen, wenigstens eine Durchbrechung aufweisenden Blasformkörper zu schaffen, welcher entlang dem Umfang der Durchbrechung eine Gestaltung der Umfangswand aufweist. Erfindungsgemäß wird dazu vorgeschlagen, daß das Abreißen des Wandbereiches nach wenigstens einmaligem Aufblasen des Durchbrechungsbereiches im noch plastischen Zustand des Kunststoffes während der Öffnungsbewegung und nachfolgendem Rückführen des Durchbrechungsbereiches durch einen gegenüber dem Blasdruck höheren Gegendruck im wesentlichen in die Ebene der Hohlkörperwand erfolgt.

Erfindungsgemäß wird damit ein geöffneter Blasformkörper erzielt, welcher Öffnungen an bestimmten Stellen in der Wandung aufweist. Der Blasformkörper selbst kann nach Abschluß des Blasvorganges mit Durchbrechungen versehen aus der Blasform entnommen werden.

Der Blasdruck zum Herstellen des Blasformkörpers nach dem erfindungsgemäßen Verfahren kann während des Blasvorganges variiert werden. Im Regelfall beträgt der Blasdruck zwischen 8 und 10 bar. Dieser Druck kann gegen Ende des Blasvorgangs nachgelassen oder erhöht werden, um das Abtrennen der ausgedehnten und querschnittsverschwächten Wandbereiche zu beschleunigen, so daß diese spätestens bei Aufhebung des erhöhten Gegendruckes von der Wand des Blasformkörpers abgerissen werden.

Das Rückführen des Durchbrechungsbereiches durch Aufbringen des höheren Gegendruckes gegen den Blasdruck erfolgt wenigstens einmal. Bei mehrfachem Nachlassen des Gegendruckes und Wiederbeaufschlagen mit dem Gegendruck in einer Art oszillierenden Verfahrensablauf kann eine schnelle Verdünnung der Wandbereiche an ihrer Verbindung zur Wand des Blasformkörpers erfolgen, so daß die Abtrennung der auf diese Art verdünnten Wandbereiche auf leichte Weise erzielt werden kann.

Die Häufigkeit des Druckwechsels steht dabei in direkter Abhängigkeit zur Wanddicke des Blasformkörpers. Auch können hier die Plastizität oder die Reckfähigkeit des verwendeten Kunststoffmaterials die Häufigkeit des technischen Ablaufes bedingen.

Die Tiefe der zusätzlichen Ausdehnung zur Erzielung der Wandverdünnung spielt bei der Durchführung des erfindungsgemäßen Verfahrens ebenfalls eine Rolle. So kann bei größerer Wanddikke und Plastizität des verwendeten Kunststoffmaterials die Tiefe der zusätzlichen Ausdehnung erhöht werden, um einen schnelleren Verfahrensablauf zu erreichen. Umgekehrt kann bei geringerer Wanddicke und niedrigerer Plastizität die Tiefe der Ausdehnung in der Wand der Blasform geringer gehalten werden.

Bei der Verarbeitung von Kunststoffen mit höherer Plastizität wurde festgestellt, daß die Durchbrechungen in dem Blasformkörper ohne Verbleiben von störenden Rückständen eingearbeitet werden können. Dieser Umstand kann darauf zurückgeführt werden, daß sich das Kunststoffmaterial in den verdünnten Zonen der Ausdehnung im Blaswerkzeug, insbesondere bei der oszillierenden Beaufschlagung von Druck- und Gegendruck, aus dem Bereich der Durchbrechung in die Umfangswand des Blasformkörpers verschiebt, die in unmittelbarer Nachbarschaft der Durchbrechung gelegen sind. Daneben wurde beobachtet, daß Teile der verdünnten Wandbereiche bei der einfachen oder oszillierenden Druckbeaufschlagung abgetrennt wurden, während andere Teile in die der Durchbrechung benachbarten Wandbereiche des Blasformkörpers eingeschoben wurden.

Die Blasform zur Durchführung des erfindungsgemäßen Verfahrens kann in ihrem Innenbereich die Konturen des endgeformten Blasformkörpers tragen und hat an definierten Stellen durch axial verschiebbare Abdeckungen versohließbare Ausnehmungen. Die Abdeckungen können Kolbenform aufweisen und stehen mit einer Druckquelle in Verbindung. Die Ausnehmungen der Blasform und die Abdeckungen besitzen gleiche Konturen und sind so gestaltet, daß die Abdeckungen in Paßform verschiebbar in den Ausnehmungen gelagert sind. Die Konturen der Abdeckungen und Ausnehmungen können dabei im Querschnitt verschieden gestaltet, z. B. rund, oval, eckig sein.

Die Größe der mit dem erfindungsgemäßen Verfahren in den Blasformkörpern erzielbaren Durchbrechungen ist nicht festgelegt und ist in erster Linie von den äußeren Konturen des Blasformkörpers abhängig. Die Durchbrechungen sind auch nicht auf bestimmte Wandbereiche des Blasformkörpers beschränkt. Sie können überall dort angeordnet werden, wo sie im späteren Einsatz des Blasformkörpers gefordert sind. Die Durchbrechungen selbst können so gestaltet sein, daß eine weitere Nachbearbeitung nicht erforderlich ist.

Der Anwendungsbereich des erfindungsgemäßen Verfahrens liegt insbesondere bei solchen Blasformkörpern, bei denen eine oder mehrere nicht zu kalibrierende Durchbrechungen ausgeformt sind. Solche Blasformkörper können beispielsweise Hohlkörper aller Art sein, deren Gewicht durch die erfindungsgemäß eingebrachten Durchbrechungen verringert und deren Eigenschaften durch Größe und Anzahl der Öffnungen beeinflußt werden kann.

In einem Beispielsfall wurde ein Blasformkörper mit flächiger Kontur von 600 × 150 × 20 mm hergestellt. In eine seiner Oberflächen wurde mehrere Ausnehmungen in kreisrunder Form nach dem erfindungsgemäßen Verfahren eingearbeitet. Die Grundwanddicke des Blasformkörpers betrug 3 mm, die Tiefe der Ausnehmungen in der Blasform, die der maximalen axialen Verschiebung der Abdeckungen entspricht, lag bei 40 mm.

Nach dem Ausstoßen des schlauchförmigen Rohlings, dem Formschluß und dem Beginn des Blasvorgangs legt sich das Kunststoffmaterial in seinem thermoplastischen Zustand in die Konturen der Blasform und der Ausnehmungen, ohne daß ein Aufreißen der Kunststoffhaut und damit das vorzeitige Ende des Blasvorgangs erfolgen würde. Bei diesem Vorgang, der den Beginn des erfindungsgemäßen Verfahrens darstellt, werden die dünnsten Wandquerschnitte in den Teilen der Kunststoffwand, die in die Ausnehmungen der Blasform eingedrungen sind, erzielt. Im vorliegenden Fall betrug die Wanddicke nach diesem ersten Verfahrensschritt an diesen Stellen ca. 0,5 mm.

Danach wurde der Gegendruck über die am Boden der Ausnehmungen befindlichen Abdeckungen aufgebracht und die Abdeckungen axial in Richtung Hohlraum des Blasformkörpers verschoben. Bedingt durch die noch plastische Phase des Kunststoffmaterials bei diesem Verfahrensschritt wird die verdünnte Wand in der einzelnen Ausnehmung in unregelmäßige Faltenform gelegt, wobei die Auffaltung auch um den Rand der Ausnehmung herum bis in den Bereich des normalen Wandquerschnitts des Blasformkörpers weitergeführt wurde.

Bei Aufhebung des Gegendrucks und Zurückführung der Abdeckung auf den Grund der Ausnehmung und der Beibehaltung des Blasdrucks im Inneren des Blasformkörpers wird die ursprünglich in die Ausnehmung hineinragende Ausstülpung der Wand des Blasformkörpers von ihrer Verbindung mit den benachbarten Wandbereichen abgetrennt. In den Blasformkörper ist auf diese Weise an definierter Stelle eine definierte Durchbrechung eingebracht worden. Auf diese Weise können in einem einzigen Verfahrensschritt bei Erhöhung der Anzahl der Ausnehmungen in der Blasform eine entsprechende Anzahl von nichtkalibrierten Durchbrechungen in den Blasformkörper eingebracht werden. Die Abdeckung kann bei ihrem erfindungsgemäßen Einsatz auch durch den Wandquerschnitt des Blasformkörpers bis in den Innenraum geführt werden.

Zur Verdeutlichung des Verfahrens ist in der Zeichnung ein schematischer Ablauf angegeben. Es zeigt

Fig. 1 einen Teilschnitt durch eine Blasform mit einer Ausnehmung, mit einer Abdeckung und mit einem eingebrachten Blasformkörper.

Fig. 2 den Teilschnitt nach Fig. 1 bei beginnender Aufbringung des Gegendrucks über die Abdeckung.

Fig. 3 den Teilschnitt nach Fig. 1 in der Endstellung der Abdeckung bei höchstem Gegendruck.

Fig. 4 den Teilschnitt nach Fig. 1 nach der Rückführung der Abdeckung in die Ausgangsstellung.

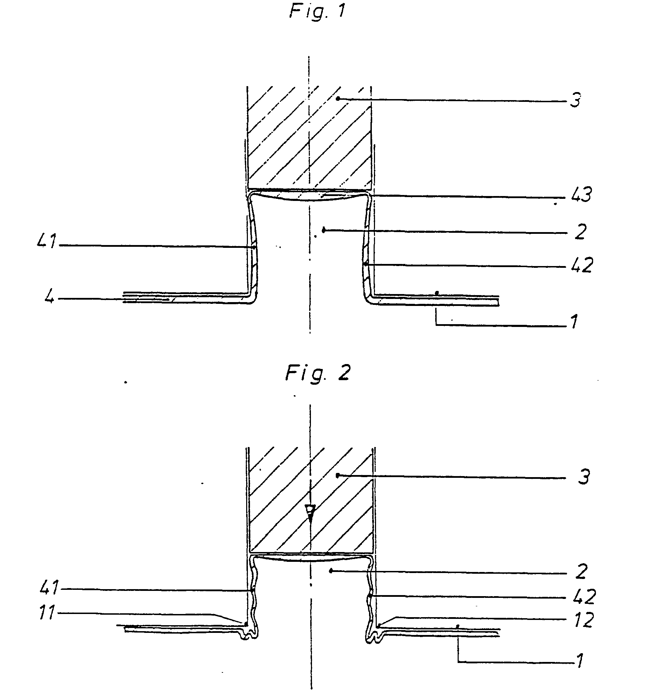

Fig. 1 zeigt die Blasform 1 im Teilschnitt. In die Blasform 1 ist eine Ausnehmung 2 eingebracht, die nach oben hin durch eine Abdeckung 3 verschlossen ist. Ein Blasformkörper 4 liegt an der Wand der Blasform 1 an und ist mit Teilwandbereichen 41, 42, 43 in die Ausnehmung 2 eingedrungen, ohne daß dabei eine Wandöffnung des Blasformkörpers 4 eingetreten wäre. Die Wandbereiche 41, 42, 43 des Blasformkörpers 4 sind insgesamt gegenüber dem Ausgangsquerschnitt verschwächt.

Fig. 2 zeigt die beginnende Aufbringung des Gegendrucks über die Abdeckung 3, daß sich das Volumen in der Ausnehmung 2 verringert und daß sich die Wandteile 41 und 42 in Faltenform legen, wobei sich diese Falten um die Ecken 11 bzw. 12 der Blasform 1 herumlegen und dort eine Art Eckenauffaltung bilden. Diese Eckenauffaltung kann auch zu einer Wandverdickung der normalen Querschnittswandung des Blasformkörpers 4 in diesem Bereich führen.

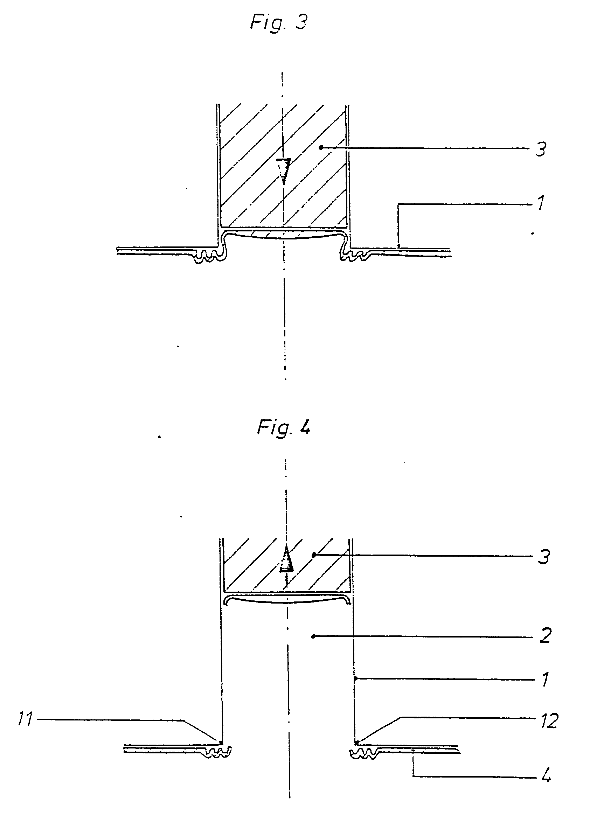

Fig. 3 zeigt die Endstellung der Abdeckung 3 und macht deutlich, daß die Abdeckung 3 praktisch das gesamte Volumen der Ausnehmung 2 ausfüllt. Die Auffaltungen der Wandbereiche 41, 42 sind nahezu gänzlich in die faltenartigen Wandverdickungen an den Randbereichen 11, 12 der Blasform 1 übergegangen.

Fig. 4 zeigt den Zustand bei der Rückführung der Abdeckung durch Aufhebung des Gegendrucks in die Ausgangsstellung. Der Wandbereich 43 ist im gezeigten Beispiel an den dünnsten Übergangsstellen zu den Wänden 41, 42 der in die Ausnehmung 2 eingedrungenen Wandbereiche des Blasformkörpers 4 abgerissen. Die dadurch geschaffene Öffnung im Blasformkörper 4 beendet den Blasvorgang.

## Patentanspruch

Verfahren zum Herstellen eines eine Durchbrechung aufweisenden Blasformkörpers aus thermoplastischem Kunststoff, bei dem ein schlauchförmiger Rohling nach dem Verschließen seiner beiden Enden mittels Blasdruckes durch Anlegen an die Innenoberfläche einer Blasform zu einem Hohlkörper blasgeformt und durch eine Öffnungsbewegung eines der Durchbrechung zugeordneten Teils der Blasform der der Durchbrechung entsprechende Wandbereich des Hohlkörpers entlang des Umfangs der Durchbrechung abgerissen wird, dadurch gekennzeichnet, daß das Abreißen des Wandbereiches (43) nach wenigstens einmaligem Aufblasen des Durchbrechungsbereichs im noch plastischen Zustand des Kunststoffes während der Öffnungsbewegung und nachfolgendem Rückführen des Durchbrechungsbereiches durch einen gegenüber dem Blasdruck höheren Gegendruck im wesentlichen in die Ebene der Hohlkörperwand (4) erfolgt.

## Claim

Method of manufacturing a perforated blow moulded thermoplastic hollow body. In this method, a tube-shaped blank, the two ends of which having been closed by blow air, is inflated after applying it to the internal surface of a blow mould to form a hollow body. The opening movement of one of the parts of the blow mould (aligned with the perforation) tears away the wall area of the hollow body along the circumference of the perforation. Here, the wall area (43) is torn away after the perforated area has been inflated at least once during the opening movement while the plastic is still soft, and after subsequent retraction of the perforated area by a counter pressure higher than the blow pressure applied mainly in the plane of the hollow body wall (4).

## Revendication

Procédé pour fabriquer un corps moulé par soufflage en matière synthétique thermoplastique ayant une perforation ; procédé selon lequel une pièce brute tubulaire dont les deux extrémités sont fermées est soufflée sur matrice en un corps creux par pression de soufflage en la posant à la surface intérieure d'un moule de soufflage et par un mouvement d'ouverture d'une partie du moule affectée à l'ouverture qui se trouve rompue dans la zone de la paroi du corps creux correspondant à l'ouverture le long du pourtour de celle-ci, caractérisé par le fait que la rupture de la zone de la paroi (43) a lieu après au moins une opération de gonflage de la zone de la perforation à l'état encore plastifié de la matière synthétique pendant le mouvement de rupture et le retour de cette zone de perforation qui y fait suite par une contrepression plus élevée que la pression de soufflage surtout au niveau de la paroi du corps creux (4).

*Fig. 1*

*Fig. 2*

Fig. 3

3

1

Fig. 4

3

2

1

11

12

4